(19) Europäisches Patentamt
European Patent Office
Office européen des brevets

(11) EP 3 572 983 A1

(12) EUROPEAN PATENT APPLICATION

(43) Date of publication:
27.11.2019 Bulletin 2019/48

(51) Int Cl.:
$G06N\ 3/04$ (2006.01)

(21) Application number: 18305625.8

(22) Date of filing: 22.05.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: InterDigital CE Patent Holdings
75017 Paris (FR)

(72) Inventors:
• REINHARD, Erik
35576 Cesson-Sévigné (FR)
• PUY, Gilles
35576 Cesson-Sévigné (FR)
• LOPEZ, Patrick
35576 Cesson-Sévigné (FR)

(74) Representative: Amor, Rim et al
InterDigital CE Patent Holdings
20, rue Rouget de Lisle
92130 Issy-les-Moulineaux (FR)

(54) **LOW DIMENSIONAL NEURAL NETWORK BASED ARCHITECTURE**

(57) The disclosure relates to an electronic device (ED) configured to perform a specific task (ST) as a function of input data (ID). Such an electronic device comprises:
- a pre-processing unit (PPU) comprising at least one low-level feature detector ($FD_1$, ..., $FD_n$), being configured to perform, from said input data (ID), generic tasks ($GT_1$, ..., $GT_m$) independent from said specific task (ST), to provide intermediate data (IntD);
- a neural network processing unit (NNU) comprising at least one neural network, called a task-specific network (TSN), trained to perform said specific task (ST) as a function of said intermediate data (IntD).

Fig. 1

EP 3 572 983 A1

## Description

### 1. Field of the disclosure

The present disclosure relates to the field of artificial neural networks. More particularly, the present disclosure relates to an electronic device comprising at least one neural network trained to perform a specific task.

### 2. Background

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Deep neural networks have made significant advances in the recent past in solving a variety of difficult problems. Deep neural networks typically exhibit a standard architecture, whereby a number of layers of neurons follow each other to eventually produce an output. A neural network is configured to perform a specific application, such as pattern recognition or data classification, through a learning process. To this end, some weights of the neural network are adjusted during a training phase. More particularly, during this training phase, one typically uses a loss to compare a generated output with a user-supplied ground-truth (supervised learning) or an automatically generated "ground truth" (unsupervised learning). This loss is then used to update the weights associated with all nodes of the neural network, using back-propagation algorithm, so that the error between the desired output and the actual output is reduced. By repeating this procedure a sufficient number of times with many training examples, the weights in the network are adjusted so that the generated output matches the ground-truth as well as possible in most cases. After training, and assuming that no overfitting has occurred, the neural network can be used to solve the specific task for which it was trained, i.e. it will produce outputs consistent with the training examples previously seen, even for inputs that were not part of the training.

A disadvantage of deep learning is that a very large amount of data is necessary to train a neural network in such a way that it can satisfactorily fulfil the task it is intended to solve. One cause for the need of such large quantities of data is that the network is operating in a high-dimensional space. In other words, the neural network has to learn everything that is necessary to accomplish a task in one go. In addition, training a high-dimensional neural network and using such a network to perform a task both require substantial computational power.

It would hence be desirable to provide a technique that would avoid at least some of these drawbacks of the prior art, for example by allowing reducing the need for very large datasets to accomplish the training of a neural network, or by allowing reducing the computational power required for both training and using such networks.

### 3. Summary

According to an aspect of the present disclosure, an electronic device configured to perform a specific task as a function of input data is disclosed. Such an electronic device comprises:

- a pre-processing unit comprising at least one low-level feature detector, being configured to perform, from said input data, generic tasks independent from said specific task, to provide intermediate data;
- a neural network processing unit comprising at least one neural network, called a task-specific network, trained to perform said specific task as a function of said intermediate data.

In that way, the pre-processing unit makes it possible to use a smaller neural network as a task-specific network, since some generic tasks consisting of detecting low-level features have already been performed at the pre-processing unit. The task-specific network may thus be considered as a low-dimensional neural network, when its dimensions are compared with those of a neural network trained to perform the same specific task within a conventional architecture comprising only a neural network processing unit and no pre-processing unit. The amount of data and the computational power required to train such a low-dimensional task-specific neural network may thus be reduced, as well as the computational power needed to perform the whole specific task from the input data.

According to an embodiment, a set of low-level feature detectors, among said at least one low-level feature detector, is selectively parameterized in a memory of said electronic device as a function of said specific task.

In that way, the plurality of available feature detectors forms a kind of toolbox, in which some feature detectors may be preferentially selected to provide the intermediate data, depending on the specific task to be performed.

According to an embodiment, at least some of said at least one low-level feature detector are connected according to a connection scheme.

In that way, low-level feature detectors can be used alone in the pre-processing unit, or they can be cascaded to form more complex feature detectors.

According to a particular feature of this embodiment, said connection scheme comprises connecting at least two low-level feature detectors in series, in parallel, or in a combination of series and parallel.

According to another particular feature, said connection scheme is defined as a function of said specific task.

In that way, depending on the specific task to be performed, the feature detectors may be combined so as to perform upper-level generic tasks likely to provide intermediate data that are best adapted to feed a neural network to perform this specific task.

According to an embodiment, said at least one low-level feature detector is defined by a rule comprising at least one predetermined weight and/or at least one trainable weight.

In that way, a low-level feature detector may be fully determined (i.e. the associated rule comprises only the predetermined weight(s), and no trainable weights), or only partially determined (i.e. the associated rule comprises at least one trainable weight).

According to an embodiment, said at least one low-level feature detector is a neural network.

According to a particular feature of this embodiment, said at least one low-level feature detector is trained to perform said generic tasks prior to and independent of the training of said task-specific network to perform said specific task.

In that way, the feature detectors themselves are some small neural networks that are pre-trained independently of the specific task to be performed. A plurality of feature detectors may thus be designed, trained and gathered so as to form a kind of toolbox, whose elements are usable and reusable to form adapted preprocessing units used to provide intermediate data to some task-specific networks.

According to an embodiment, said specific task is a gesture recognition task.

According to an embodiment, said generic tasks belong to the group comprising:

- line segment detection;
- "T" shape detection;
- color-opponent detection;
- sine grating detection;
- Gabor patch detection;
- detection of areas of maximum curvature;
- detection of concentric circles or circle segments.

The present disclosure also concerns a method for performing a specific task as a function of input data. Such a method is implemented by an electronic device, and comprises:

- providing intermediate data, at a pre-processing unit of said electronic device, said intermediate data being provided by at least one low-level feature detector of said pre-processing unit configured so as to perform, from said input data, generic tasks independent from said specific task;
- performing said specific task as a function of said intermediate data, at a neural network processing unit of said electronic device comprising at least one neural network, called a task-specific network, trained to perform said specific task.

According to an embodiment, providing intermediate data comprises selectively parameterizing a set of low-level feature detectors among said at least one low-level feature detector, as a function of said specific task.

According to an embodiment, providing intermediate data comprises connecting at least some of said at least one low-level feature detector according to a connection scheme, said connection scheme being defined as a function of said specific task.

According to an embodiment, said at least one low-level feature detector is a neural network and said method further comprises training said at least one low-level feature detector to perform said generic tasks prior to and independent of the training of said task-specific network to perform said specific task.

The present disclosure also concerns a computer program product downloadable from a communication network and/or recorded on a medium readable by a computer and/or executable by a processor, comprising program code instructions for implementing the method as described above.

The present disclosure also concerns a non-transitory computer-readable medium comprising a computer program product recorded thereon and capable of being run by a processor, including program code instructions for implementing the method as described above.

Such a computer program may be stored on a computer readable storage medium. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

**4. Brief description of the drawings**

Embodiments of the present disclosure can be better understood with reference to the following description and drawings, given by way of example and not limiting the scope of protection, and in which:

- **Figure 1** is a schematic block diagram illustrating an electronic device configured to perform a specific task as a function of input data, according to an embodiment of the present disclosure;
- **Figure 2** is a flow chart for illustrating the general principle of the proposed technique for performing a specific task, according to an embodiment of the present disclosure;
- **Figure 3** illustrates a convolution kernel allowing implementing a triangle detector, according to an embodiment of the present disclosure;
- **Figure 4** is a schematic block diagram illustrating an example of an apparatus for performing gesture recognition as a specific task, according to an embodiment of the present disclosure.

The components in the figures are not necessarily to scale, emphasis instead being placed upon illustrating the principles of the disclosure.

**5. Detailed description**

*5.1 General principle*

The general principle of the present disclosure relies on particular neuron network based architecture, allowing an electronic device to perform a specific task. The electronic device comprises a neural network processing unit formed by at least one neural network, called a task-specific network, trained to perform said specific task. It is proposed, in one aspect of the present disclosure, to place a pre-processing unit in front of the neural network processing unit. As it is described hereafter with reference to the accompanying figures, this pre-processing unit is designed so as to allow, to some extent, unloading the task-specific network of at least a part of its learning load. As shown below, this offers many direct and indirect benefits. Indeed, with the proposed technique, the task-specific network used to perform the specific task may be of lower dimensions (in terms of number of layers and/or number of neurons) than if a neural network was used within conventional neuron network based architecture, i.e. with no pre-processing unit. The time and/or amount of data and/or the computational power required to train the task-specific network to perform the specific task may also be reduced, as well as the computational power needed to perform the whole specific task from some input data. The whole specific task may also be parallelized, which also speeds up the overall process.

This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the scope of the disclosure as defined by the claims. In the drawings, like or similar elements are designated with identical reference signs throughout the several views thereof. In the drawings, like or similar elements are designated with identical reference signs throughout the several views thereof.

While not explicitly described, the present embodiments and variants may be employed in any combination or sub-combination.

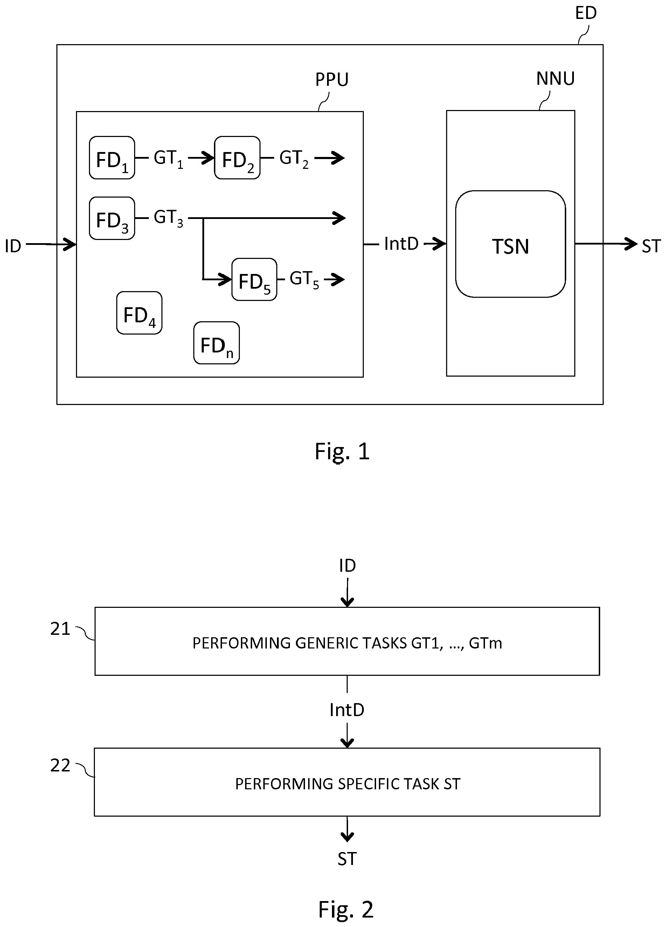

An implementation of an electronic device according to one embodiment of the disclosure is described in relation with **figure 1.** The electronic device ED comprises a pre-processing unit PPU and a neural network processing unit NNU, and it is (dynamically or not) configured to perform a specific task ST as a function of input data ID. More particularly, the specific task ST is performed by the neural network processing unit NNU, as a function of intermediate data IntD provided by the pre-processing unit PPU from the input data ID. To this end, the neural network processing unit NNU comprises at least one neural network, called a task-specific network TSN, trained to perform said specific task ST as a function of said intermediate data IntD.

The pre-processing unit is in charge of providing the intermediate data IntD, from input data ID of the electronic device. To this end, according to the disclosure, the pre-processing unit PPU comprises at least one low-level feature detector $FD_1$, ..., $FD_n$. A low-level feature detector may be defined as a predetermined module that is, alone or in combination with other feature detectors, configured to perform some generic tasks $GT_1$, ..., $GT_m$ independent from the specific task ST to be performed by the electronic device ED. Such generic tasks comprise detecting given basic pattern in the input data. Some examples of low-level feature detectors are described later in the document, in relation with an illustrative embodiment. At least some of the various outputs of the low-level feature detectors - i.e. the results of the accomplishment of the various generic tasks by the low-level feature detectors - form the intermediate data IntD that are used as an input of the neural network processing unit NNU.

In the context of the disclosure, the generic tasks are considered as "independent" from the specific task in the sense that they are not inextricably linked to a given specific task. In other words, a given feature detector configured to perform a given generic task may be used in many different settings, to provide intermediate data to various neural network processing units trained (and/or configured) to perform very different specific tasks. As a result, the proposed technique makes it possible to design in advance (i.e. without taking any specific task into consideration) a plurality of predefined low-level feature detectors, thus forming a kind of toolbox gathering a set of available feature detectors that may be then deployed and used within a pre-processing unit according to the disclosure.

Although the generic tasks - and thus the set of available low-level feature detectors - are defined independently from the specific task to be performed by the electronic device, it may be of some interest, in some embodiments, to take account of said specific task when implementing a pre-processing unit. This allows deploying therein some low-level feature detectors that are likely to provide well adapted intermediate data to the neural network processing unit, regarding the specific task to be accomplished. Thus, according to an embodiment, a set of low-level feature detectors is selectively parameterized in a memory of the electronic device, among the available low-level feature detectors FD1, ..., FDn, as a function of the specific task ST to perform. In other words, depending on the specific task, some feature detectors may be preferentially selected among the whole set of available feature detectors, to provide the intermediate data. For example, a feature detector performing the generic task of detecting concentric circles in an image may be preferentially selected among available feature detectors, when the specific task to be performed by the task-specific network is a face recognition task. Indeed, some studies tend to show that a visual area performing concentric circles detection would be activated in the human brain when it performs face recognition, and it is known that the way artificial neural networks process information is inspired by the way biological nervous systems, such as the brain, does: a concentric circles feature detector is thus likely to provide well-adapted intermediate data to a task-specific network implemented to perform face recognition.

According to an embodiment, some low-level feature detectors may be connected within the pre-processing unit, so as to form more complex feature detectors. More particularly, feature detectors may be connected according to a connection scheme, comprising connecting at least two low-level feature detectors in series, in parallel, or in a combination of series and parallel. In one embodiment, this connection scheme is defined as a function of the specific task to be performed by said electronic device.

In that way, low-level feature detectors act as elementary bricks that can be selected and then used alone or cascaded to form more complex feature detectors, thus providing great flexibility and modularity allowing designing a pre-processing unit that is particularly suitable to be placed in front of a given task-specific network. For example, referring back to figure 1, low-level feature detectors $FD_1$ to $FD_n$ form a toolbox of available feature detectors, among which feature detectors $FD_1$, $FD_2$, $FD_3$, $FD_5$ have been more particularly selected and connected so as to provide intermediate data that are likely to be well-adapted to the accomplishment of specific task ST by the task-specific network TSN.

According to an embodiment, a low-level feature detector is defined by a rule comprising at least one predetermined weight and/or at least one trainable weight. A low-level feature detector may thus be fully determined (i.e. the associated rule comprises only predetermined weights, and no trainable weights), or only partially determined (i.e. the associated rule comprises at least one trainable weight). More particularly, while a rule allows defining an overall framework regarding a generic task to be performed by the low-level feature detector, the addition of trainable weights within the rule offers some flexibility regarding other aspects that are related to, but that do not affect, this overall framework. For example, a rule implemented so as to allow performing the generic task of detecting triangle patterns within an image (overall framework) may include a trainable weight allowing to detect, from a training set, a particular contrast level between identified triangles and neighbouring pixels in the image.

According to an embodiment, the low-level feature detectors are themselves neural networks. The proposed technique then consists of splitting a large conventional neural network into smaller neural networks, with:

- some neural networks in a pre-processing unit, each trained to respond to given low-level features in the input data, i.e. to perform generic tasks;
- at least one task-specific network in a neural network processing unit, trained to perform a specific task from the output of some feature detectors of the pre-processing unit.

This allows giving even more flexibility to the proposed architecture, since the low-level feature detectors can themselves be trained so as to better perform the generic tasks.

According to a particular characteristic of this embodiment, since the feature detectors perform some generic tasks that are independent from the specific task to be accomplished by the electronic device, they can be trained to perform said generic tasks prior to and independent of the training of said task-specific network to perform said specific task. In other words, some weights associated with these low-level feature detectors may be adjusted by training, before deploying the low-level feature detectors in a pre-processing unit of an electronic device, and independently of the specific task to be performed by this electronic device.

Alternatively or complementary, a generic low-level feature detector may be augmented with a small number of weights that can be trained in the context of, and along with, the task specific network. In that way, the low-level feature detector can be partially adapted to the specific task, while requiring only very few weights to be trained, thus allowing providing an advantageous trade-off between the cost of training and adaptability to the specific task to be performed. For example, a low-level feature detector may be predefined to be a line detector, but may also incorporate a single trainable weight that determines its sensitivity to contrast. In other words, there are no trainable weights associated with learning the generic task of detecting lines (location, length and orientation of lines to be detected by the line detector may be fixed, for example), but the line detector may still be trained to be sensitive only to lines of a certain limited range of contrasts. In that way, the number of weights to be trained (one associated with a contrast value in this particular example) is significantly smaller than the number of weights that would have to be trained if a neural network would need to learn to detect lines, but the low-level feature detector still retains a certain degree of flexibility allowing it to better adapt to the specific task to be performed by the task-specific network.

Referring now to **Figure 2,** a flow chart illustrating a method for performing a specific task is presented, according to an embodiment of the present disclosure. This method is implemented by an electronic device as described above.

At step 21, some intermediate data IntD are provided by the pre-processing unit PPU of the electronic device. More particularly, the intermediate data IntD are provided by at least one low-level feature detector $FD_1$, ..., $FD_n$ of said pre-processing unit PPU configured so as to perform, from said input data ID, generic tasks $GT_1$, ..., $GT_m$ independent from said specific task ST.

As already explained, the set of available feature detectors may be considered as a toolbox, in which pertinent low-level feature detectors may be selected and arranged, for example depending on the specific task to be performed by the electronic device. Thus, according to an embodiment of the proposed technique, step 21 for providing intermediate data may comprise selectively parameterizing a set of low-level feature detectors among the at least one low-level feature detector $FD_1$, ..., $FD_n$, as a function of said specific task ST to be performed by said electronic device. According to an alternative or complementary embodiment, step 21 for providing intermediate data may also comprise connecting at least some of said at least one low-level feature detector $FD_1$, ..., $FD_n$ according to a connection scheme, the connection scheme being defined as a function of said specific task ST to be performed by said electronic device.

At step 22, the specific task ST is performed at the neural processing unit NNU of the electronic device. To this end, the intermediate data provided by the pre-processing unit PPU are used as input of at least one neural network, called a task-specific network TSN, trained to perform said specific task ST.

According to an embodiment, feature detectors $FD_1$, ..., $FD_n$ are neural networks and the method for performing the specific task ST further comprises training the low-level feature detectors $FD_1$, ..., $FD_n$ to perform generic tasks $GT_1$, ..., $GT_m$ prior to and independent of the training of said task-specific network TSN to perform said specific task ST.

### 5.2 Exemplary embodiments

According to the general principle introduced above, the input data may be any form of data. For ease of understanding, it is now proposed to illustrate at least some aspects of the proposed technique by focusing more particularly on an architecture configured to perform specific tasks in the field of image processing, from input data that are visual data, such as images.

It is known that deep neural networks can be trained for many different specific visual tasks, such as, for example, classification, localization, detection or segmentation tasks, or tasks that take an image as input and produce another image as output (e.g. style transfer or color transfer tasks). However, if one looks at the types of features that intermediary nodes of such networks respond to, it can be observed that there are many neurons that respond to very basic shapes such as lines, edge, color opponency, Gabor patterns, etc. These kinds of features are emergent for nearly all visual specific tasks. In the field of image processing, the detection of these low-level features may thus be considered as generic tasks that are independent from the specific visual task to be performed itself.

According to the proposed technique, it is thus proposed to build a kind of toolbox gathering some low-level feature detectors configured to perform these generic tasks. Such a toolbox may comprise, but is of course not limited to, low-level feature detectors configured to perform generic tasks such as line segment detection, "T" shape detection, color-opponent detection, sine gratings detection, Gabor patches detection, etc. Some of these low-level feature detectors may then be deployed in a pre-processing unit, to provide intermediate data that are used afterwards to feed a task-specific network, notably for training it in a first phase. In that way, the task-specific network may be, to some extent, relieved of the load to learn these features from a training set. As a result, the amount of data needed to train the task-specific network may be reduced, as well as the size (in terms of number of layers and/or neurons) of the task-specific network.

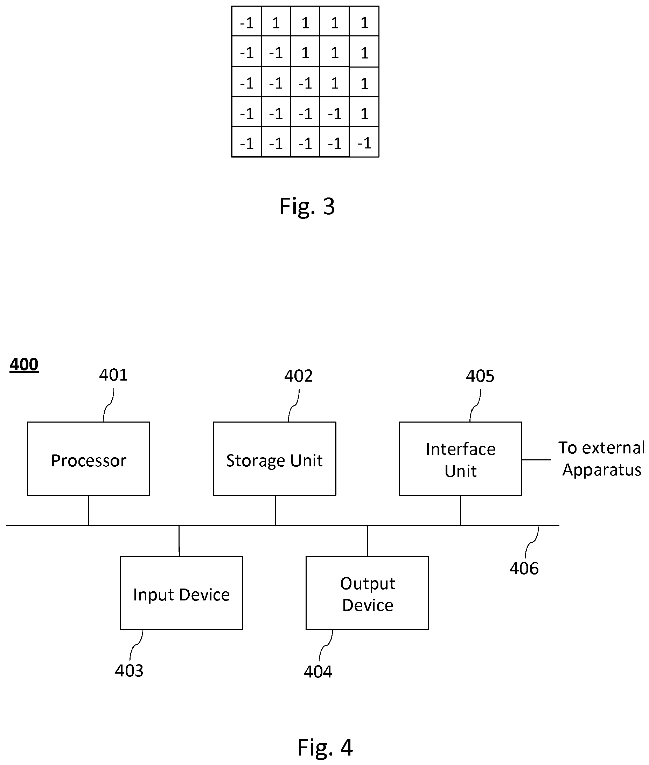

The low-level feature detectors may be implemented under several forms. Basic feature detectors can for example be obtained by simply applying a convolution between a convolution matrix, also referred to as a kernel, and an input image. Depending on how the kernel is built, the detection of various basic patterns may be performed. For example, a triangle detector may be defined by using a kernel such as the one shown in relation with **figure 3**.

In the example of figure 3, the triangle detector is fully determined, since the kernel weights are set in advance and remain unchanged. However, it may be useful, in some situations, to add more flexibility to the proposed architecture. For example, referring back to the example of a triangle detector, it might be important, for some applications, to detect a given contrast level between the detected triangle and neighbouring pixels, from a training set. Other applications may require combining some feature detectors to build more complex feature detectors. To handle these cases, according to an embodiment, the feature detectors can themselves take the form of neural networks, with weights to update (according to a particular feature of this embodiment, a plurality of feature detectors may also be gathered within layers of a same neural network). Examples of such low-level feature detectors are given in the following. It is assumed that a feature detector is composed of $n$ layers of $k_i$ neurons, where $i$ is the number of the layer. The layers are assumed to be 'retinotopic', i.e. that spatial coordinates of neurons in a given layer correspond to pixel locations in the image. A given neuron is then indicated by $A(x,y, i)$, $x$ and $y$ being the spatial coordinates of the neuron in layer $i$. Typically, neurons take input from a subset of the neurons in the preceding layer, thereby maintaining retinotopy. For example, the inputs from neuron $A(x,y,i)$ come from neurons located within a radius of $r$ of location $(x,y)$ in layer $i$ - 1. These inputs are normally weighted, summed and then passed into an activation function, to produce an output that can be passed to neurons in layer $i$ + 1.

For example, to implement a rudimentary center-surround mechanism, the outputs of neurons in layer $i$ - 1 located within a radius of $r_1$ of location $(x,y)$ may be given positive weights, while the neurons in layer $i$ - 1 located within a radius between $r_1$ and $r_2$ of location $(x, y)$ may be given negative weights. Such a center-surround mechanism may serve afterwards to build many higher-level detection tasks, including edge detection, line detection, "T"-junction detection, motion detection, etc.

Hence, a line detector may then be constructed by connecting another feature detector to the previously described center-surround feature detector. For example, to detect the presence of a horizontal line segment, a line detection neuron $A(x,y,i)$ may take as input, and sum, center-surround outputs at locations $x$ - $g$ to $x$ + $g$. Such a connection allows detecting a line segment of length $2g$ centered at location $x$. Other shapes such as corners, "T"-junctions and curves may be constructed by changing the connections.

Similarly, a line motion detector may be constructed by connecting the line detector previously described to a motion detector. For example, to detect a vertical motion of a horizontal line, a vertical motion detection neuron may take as input outputs of a horizontal line detector. Here a temporal dimension may be introduced, thus characterizing a neuron as $A(x,y,i,t)$. Motion is detected if a sum such as the one given below as an illustrative example is large:

$$\sum_{h=-3}^{3} \sum_{s=-5}^{0} A(x, y + h, i - 1, t + s)$$

When appropriate, these neural network low-level feature detectors may be trained, by updating some weights of the network according to standard back-propagation methods, possibly with the aid of an Adam-like scheme to take into account previous activations. By training such small neural networks as low-level feature detectors, and by connecting them to build more complex or high-level feature detectors, it is thus possible, to some extent, to modularize the learning in a manner similar to how the visual cortex in the human brain operates, with some area detecting very generic low-level features (such as color opponency, or patterns like line segments, sine gratings, Gabor patches etc.). Thus, a complete neural learning system may be defined as a composition of a number of simple and possibly pre-trained neural networks that perform generic tasks, followed by at least one task-specific neural network that takes the output of the preceding simple networks to accomplish a given specific task.

### 5. 3 Other advantages

As previously presented, considering a given specific task to perform, and when compared to a conventional neural network based architecture comprising a neural network processing unit trained to perform said specific task but no pre-processing unit, the proposed architecture with a pre-processing unit makes it possible to use a smaller neural network as a task-specific network. Indeed, some generic tasks consisting of detecting low-level features have already been performed at the pre-processing unit, thus allowing, to some extent, unloading the task-specific network of at least a part of its learning load. The amount of data and the computational power required to train the neural network are then reduced, allowing performing the training of the task-specific network locally instead of using high computational power solutions such as architectures involving cloud-computing for example. For example, the training can be performed within a consumer device having low computational power, such as a set-top box or a television. Furthermore, local learning has some advantages. For example, locally learned behaviours can be more specific to the users themselves: a voice recognition system that is trained inside a local device will be able to adapt to its users' specific accents better than a cloud-based system that gets data from all users. Local learning also makes it possible to avoid privacy issues.

As an illustrative and non-limiting example, the proposed technique allows implementing an improved gesture recognition system for television remote control. Gesture recognition generally provides a genuinely new and useful user input mechanism, which offers a significant benefit for users of televisions. Indeed, it enables remote control of televisions as well as interaction with applications running on televisions without the use of hardware input devices such as mice, keyboards or remote control devices. Gesture recognition requires robust and efficient recognition and tracking of hand positions, followed by recognition of a gesture. The methods used to perform such hand tracking and gesture recognition have to be as efficient as possible so that the user experience is optimal. The proposed technique precisely makes it possible to improve hand tracking and gesture recognition efficiency since it allows, for the reasons already presented above, to perform the training locally, directly on a television or a set-top box. This enables significant progress, since it makes it possible to perform customized learning, including:

-    adaptability to specific viewing environments, as every consumer's home is different, and consumers are seated (or standing) at different distances from the device;
-    adaptability to specific gestures made by specific users, so that consumers may be less precise with the gestures they make, while still being able to accurately control the television.

In addition, local learning provides independence from cloud computing: the data generated by the television are processed locally, and there is no need to communicate them to online cloud servers. This makes it possible to perform any adaptability locally, in the television or the set-top box itself, which is of great interest especially at a time when online privacy is a growing concern.

**Figure 4** shows a schematic block diagram illustrating an example of an apparatus 400 for performing gesture recognition as a specific task, according to an embodiment of the present disclosure. Such an apparatus may be embedded in a consumer device, a television device or a set-top box for example. In another embodiment, it may be an external apparatus connected to a television device or to a set-top box.

The apparatus 400 includes a processor 401, a storage unit 402, an input device 403, an output device 404, and an interface unit 405 which are connected by a bus 406. Of course, constituent elements of the computer apparatus 400 may be connected by a connection other than a bus connection using the bus 406.

The processor 401 controls operations of the apparatus 400. The storage unit 402 stores at least one program to be executed by the processor 401, and various data, including for example low-level feature detectors and task-specific network settings such as weights associated with the neural networks and low-level feature detectors connection scheme, parameters used by computations performed by the processor 401, intermediate data of computations performed by the processor 401 such as intermediate data to provide to the task-specific network, and so on. The processor 401 is formed by any known and suitable hardware, or software, or a combination of hardware and software. For example, the processor 401 is formed by dedicated hardware such as a processing circuit, or by a programmable processing unit such as a CPU (Central Processing Unit) that executes a program stored in a memory thereof.

The storage unit 402 is formed by any suitable storage or means capable of storing the program, data, or the like in a computer-readable manner. Examples of the storage unit 402 include non-transitory computer-readable storage media such as semiconductor memory devices, and magnetic, optical, or magneto-optical recording media loaded into a read and write unit. The program causes the processor 401 to perform a method for performing gesture recognition as a function of input data according to an embodiment of the present disclosure as described previously. More particularly, the program causes the processor 401 to compute, from said input data, intermediate data to provide to a task-specific network trained to perform the specific task, so that the specific task may be performed.

The input device 403 is formed for example by an image-capturing device, such as a camera.

The output device 404 is formed for example by a processing unit configured to make decision as a function of recognized gesture.

The interface unit 405 provides an interface between the apparatus 400 and an external apparatus. The interface unit 405 may be communicable with the external apparatus via cable or wireless communication. For example, in an embodiment where the apparatus 400 is not embedded in a set-top box or in a television, an external apparatus may be such a set-top box or a television.

Although only one processor 401 is shown on figure 4, it must be understood that such a processor may comprise different modules and units embodying the functions carried out by apparatus 400 according to embodiments of the present disclosure, such as the unit previously described in relation with figure 1:

-    a pre-processing unit comprising at least one low-level feature detector, being configured to perform, from input data, generic tasks independent from the specific task, to provide intermediate data;
-    a neural network processing unit comprising at least one neural network, called a task-specific network,

trained to perform the specific task as a function of said intermediate data.

These modules and units may also be embodied in several processors 401 communicating and cooperating with each other.

While the apparatus of figure 4 has been described with reference to an exemplary embodiment wherein the specific task is a gesture recognition task, it will be understood by those of ordinary skill in the pertinent art that various changes may be made and equivalents may be substituted for the elements thereof for performing other specific task, without departing from the scope of the disclosure.

**Claims**

1. An electronic device (ED) configured to perform a specific task (ST) as a function of input data (ID), **wherein** said electronic device comprises:

   - a pre-processing unit (PPU) comprising at least one low-level feature detector ($FD_1$, ..., $FD_n$), being configured to perform, from said input data (ID), generic tasks ($GT_1$, ..., $GT_m$) independent from said specific task (ST), to provide intermediate data (IntD);
   - a neural network processing unit (NNU) comprising at least one neural network, called a task-specific network (TSN), trained to perform said specific task (ST) as a function of said intermediate data (IntD).

2. The electronic device according to claim 1, **wherein** a set of low-level feature detectors is selectively parameterized in a memory of said electronic device, among said at least one low-level feature detector ($FD_1$, ..., $FD_n$), as a function of said specific task (ST) to perform by said electronic device.

3. The electronic device according to claim 1 or 2, **wherein** at least some of said at least one low-level feature detector ($FD_1$, ..., $FD_n$) are connected according to a connection scheme.

4. The electronic device according to claim 3, **wherein** said connection scheme comprises connecting at least two low-level feature detectors in series, in parallel, or in a combination of series and parallel.

5. The electronic device according to claim 3 or 4, **wherein** said connection scheme is defined as a function of said specific task (ST) to perform by said electronic device.

6. The electronic device according to any one of claims 1 to 5, **wherein** said at least one low-level feature detector ($FD_1$, ..., $FD_n$) is defined by a rule comprising at least one predetermined weight and/or at least one trainable weight.

7. The electronic device according to any one of claims 1 to 6, **wherein** said at least one low-level feature detector ($FD_1$, ..., $FD_n$) is a neural network.

8. The electronic device according to claim 7, **wherein** said at least one low-level feature detector ($FD_1$, ..., $FD_n$) is trained to perform said generic tasks ($GT_1$, ..., $GT_m$) prior to and independent of the training of said task-specific network (TSN) to perform said specific task (ST).

9. The electronic device according to any one of claims 1 to 8, **wherein** said specific task (ST) is a gesture recognition task.

10. The electronic device according to any one of claims 1 to 9, **wherein** said generic tasks belong to the group comprising:

    - line segment detection;
    - "T" shape detection;
    - color-opponent detection;
    - sine grating detection;
    - Gabor patch detection;
    - maximum curvature detection;
    - concentric circles detection.

11. A method for performing a specific task (ST) as a function of input data (ID), said method being implemented by an electronic device (ED), **wherein** said method comprises:

    - providing intermediate data (IntD), at a pre-processing unit (PPU) of said electronic device (ED), said intermediate data (IntD) being provided by at least one low-level feature detector ($FD_1$, ..., $FD_n$) of said pre-processing unit (PPU) configured so as to perform, from said input data (ID), generic tasks ($GT_1$, ..., $GT_m$) independent from said specific task (ST);
    - performing said specific task (ST) as a function of said intermediate data (IntD), at a neural network processing unit (NNU) of said electronic device (ED) comprising at least one neural network, called a task-specific network (TSN), trained to perform said specific task (ST).

12. The method according to claim 11, **wherein** providing intermediate data comprises selectively parameterizing a set of level feature detector among said at least one low-level feature detector ($FD_1$, ..., $FD_n$), as a function of said specific task (ST) to perform by said electronic device.

13. The method according to claim 11 or 12, **wherein** providing intermediate data comprises connecting at least some of said at least one low-level feature detector ($FD_1$, ..., $FD_n$) according to a connection scheme, said connection scheme being defined as a function of said specific task (ST) to perform by said electronic device.

14. The method according to any one of claims 11 to 13, **wherein** said at least one low-level feature detector ($FD_1$, ..., $FD_n$) is a neural network and wherein said method further comprises training said at least one low-level feature detector ($FD_1$, ..., $FD_n$) to perform said generic tasks ($GT_1$, ..., $GT_m$) prior to and independent of the training of said task-specific network (TSN) to perform said specific task (ST).

15. A computer program product downloadable from a communication network and/or recorded on a medium readable by a computer and/or executable by a processor, comprising program code instructions for implementing a method according to any one of claims 11 to 14.

Fig. 1

Fig. 2

| -1 | 1 | 1 | 1 | 1 |
|----|----|----|----|----|
| -1 | -1 | 1 | 1 | 1 |
| -1 | -1 | -1 | 1 | 1 |
| -1 | -1 | -1 | -1 | 1 |
| -1 | -1 | -1 | -1 | -1 |

Fig. 3

**400**

401

402

405

| Processor | Storage Unit | Interface Unit | — To external Apparatus |

406

| Input Device | Output Device |

403

404

Fig. 4

Europäisches
Patentamt

European
Patent Office

Office européen
des brevets

## EUROPEAN SEARCH REPORT

Application Number

EP 18 30 5625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 035 246 A2 (SAMSUNG ELECTRONICS CO LTD [KR]) 22 June 2016 (2016-06-22) * paragraph [0031] - paragraphs [0107], [0157]; figures 2-10 * ----- | 1-15 | INV. G06N3/04 |
| X | Jacob Andreas ET AL: "Deep Compositional Question Answering with Neural Module Networks", , 24 July 2017 (2017-07-24), XP055525240, Retrieved from the Internet: URL:https://arxiv.org/pdf/1511.02799.pdf [retrieved on 2018-11-20] * Sections 1, 4, and 5 * ----- | 1-15 | |
| A | CN 107 977 706 A (ANTS TECH LTD) 1 May 2018 (2018-05-01) * paragraph [0012] - paragraph [0071] * ----- | 1-15 | |
| A | LI JIAKUN ET AL: "Using Gabor filter in 3D convolutional neural networks for human action recognition", 2017 36TH CHINESE CONTROL CONFERENCE (CCC), TECHNICAL COMMITTEE ON CONTROL THEORY, CAA, 26 July 2017 (2017-07-26), pages 11139-11144, XP033150515, DOI: 10.23919/CHICC.2017.8029134 [retrieved on 2017-09-07] * Sections 2 and 3 * ----- | 9,10 | TECHNICAL FIELDS SEARCHED (IPC) G06N |

-/--

The present search report has been drawn up for all claims

| Place of search | Date of completion of the search | Examiner |
|---|---|---|
| The Hague | 22 November 2018 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

## EUROPEAN SEARCH REPORT

Application Number

EP 18 30 5625

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUOGEN WANG ET AL: "Large-Scale Multimodal Gesture Segmentation and Recognition Based on Convolutional Neural Networks", 2017 IEEE INTERNATIONAL CONFERENCE ON COMPUTER VISION WORKSHOPS (ICCVW), 2017, pages 3138-3146, XP055526173, Venice, IT DOI: 10.1109/ICCVW.2017.371 ISBN: 978-1-5386-1034-3 * Sections 3 and 4 * ----- | 9,10 | |

TECHNICAL FIELDS SEARCHED (IPC)

The present search report has been drawn up for all claims

| Place of search | Date of completion of the search | Examiner |
|---|---|---|
| The Hague | 22 November 2018 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 572 983 A1

## ANNEX TO THE EUROPEAN SEARCH REPORT
## ON EUROPEAN PATENT APPLICATION NO.

EP 18 30 5625

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2018

| Patent document cited in search report | | Publication date | Patent family member(s) | | Publication date |
|---|---|---|---|---|---|
| EP 3035246 | A2 | 22-06-2016 | EP 3035246 A2<br>US 2016171346 A1 | | 22-06-2016<br>16-06-2016 |
| CN 107977706 | A | 01-05-2018 | NONE | | |

For more details about this annex : see Official Journal of the European Patent Office, No. 12/82